# EUROPÄISCHE PATENTANMELDUNG

(11) **EP 1 548 078 A1**
(43) Veröffentlichungstag der Anmeldung: **29.06.2005**
(21) Anmeldenummer: 04106205.0
(22) Anmeldetag: 01.12.2004
(51) Int. Cl.: C09J 7/00, C09J 7/02, C09J 153/02

(54) **Chemisch vernetzbare Klebestreifen**

(30) Priorität: 22.12.2003 DE 10361173; 14.02.2004 DE 102004007258
(71) Anmelder: tesa AG, 20253 Hamburg (DE)
(72) Erfinder: Krawinkel, Thorsten, 22457, Hamburg (DE); Ring, Christian, 20259, Hamburg (DE)

(57) **Zusammenfassung**

Klebemasse für einen Klebfolienstreifen enthaltend ein Gemisch aus einem säure- oder säureanhydridmodifizierten Vinylaromatenblockcopolymer sowie einer epoxidgruppenhaltigen Verbindung mit mindestens zwei Epoxidgruppen die bei Temperaturen von mindestens 120 °C, insbesondere mindestens 150 °C vernetzt wird, wobei sich der Klebfolienstreifen durch dehnendes Verstrecken in Richtung der Klebfuge lösen lässt.

## Beschreibung

Die Erfindung betrifft eine Klebmasse für ein- oder beidseitige Klebfolienstreifen, welche sich durch dehnendes Verstrecken in der Verklebungsebene rückstands- und zerstörungsfrei wiederablösen lassen und die auch unter erhöhter Temperatur gute Klebeigenschaften besitzen.
Die Erfindung betrifft ferner einen Klebfolienstreifen, der aus einer solchen Klebmasse hergestellt wird.

Elastisch oder plastisch hochdehnbare Selbstklebebänder, welche sich durch dehnendes Verstrecken in der Verklebungsebene rückstands- und zerstörungsfrei wieder ablösen lassen, sind beispielsweise aus der US 4,024,312 A, DE 33 31 016 C2, WO 92/11332 A1, WO 92/11333 A1, DE 42 22 849 A1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als stripfähige Selbstklebebänder bezeichnet.

Eingesetzt werden solche stripfähigen Selbstklebebänder häufig in Form von ein- oder beidseitig haftklebrigen Klebfolienstreifen, die bevorzugt einen nicht haftklebrigen Anfassbereich aufweisen, von welchem aus der Ablöseprozess eingeleitet wird. Besondere Anwendungen entsprechender Selbstklebebänder finden sich unter anderem in DE 42 33 872 A1, DE 195 11 288 A1, US 5,507,464 A, US 5,672,402 A und WO 94/21157 A1. Spezielle Ausführungsformen sind auch in der DE 44 28 587 A1, DE 44 31 914 A1, WO 97/07172 A1, DE 196 27 400 A1, WO 98/03601 A1 und DE 196 49 636 A1, DE 197 20 526 A1, DE 197 23 177 A1, DE 197 23 198 A1, DE 197 26 375 A1, DE 197 56 084 A1, DE 197 56 816 A1, DE 198 42 864 A1, DE 198 42 865 A1, WO 99/31193 A1, WO 99/37729 A1, WO 99/63018 A1, WO 00/12644 A1, und DE 199 38 693 A1 beschrieben.

Bevorzugte Einsatzgebiete vorgenannter stripfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Sie ersetzen hierbei klassische Befestigungsmittel wie zum Beispiel Stecknadeln, Pin-Nadeln, Heftzwecken, Nägel, Schrauben, klassische Selbstklebebänder und Flüssigklebstoffe. Wesentlich für den erfolgreichen Einsatz der oben genannten Klebfolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt. Hierbei ist insbesondere zu berücksichtigen, dass die Funktionsfähigkeit der Klebestreifen auf einer Vielzahl von Substraten gegeben sein muss, um als Universalfixierung im Wohn-, Arbeits- und Bürobereich dienen zu können.

Obwohl in der oben zitierten Patentliteratur eine breite Palette von Haftklebemassen für die Verwendung in stripfähigen Selbstklebebändern beschrieben werden, weisen aktuell im Markt befindliche Handelsprodukte (zum Beispiel tesa™ Powerstrips™ der tesa AG, 3M Command™ Adhesive Klebstreifen der Firma 3M, Plastofix™ Formuli Force 1000 Klebestreifen der Firma Plasto S. A. sowie die entsprechenden Klebestreifen der Firma Nitoms) sämtlich Haftklebemassen auf Basis von Styrolblockcopolymeren meistens mit im Elastomerblock ungesättigten Polydienblöcken auf. Typischerweise finden lineare oder radiale Blockcopolymere auf Basis von Polystyrolblöcken und Polybutadienblöcken und/oder Polyisoprenblöcken Verwendung, also zum Beispiel radiale Styrol-Butadien-(SB)ₙ und/oder lineare Styrol-Butadien-Styrol (SBS)- und/oder lineare Styrol-Isopren-Styrolblockcopolymere (SIS). Vorteile der vorgenannten styrolblockcopolymerbasierenden Haftklebemassen für den Einsatz in stripfähigen Selbstklebebändern sind zum Beispiel die mit ihnen erreichbaren hohen Verklebungsfestigkeiten (bedingt unter anderem durch die gleichzeitige Realisierung einer hohen Kohäsion und hoher Klebkräfte), eine ausgeprägte Reduzierung der Klebrigkeit beim verstreckenden Ablösen (welches den Ablöseprozess deutlich erleichtert oder gar erst ermöglicht) sowie eine hohe Zugfestigkeit, welche insbesondere für einen reißerfreien Ablöseprozess wesentlich ist.

Die im Markt befindlichen Produkte, welche sämtlich Haftklebemassen auf Basis von Styrolblockcopolymeren nutzen, zeigen Schwächen sowohl bei der Verklebung schwerer Gegenstände als auch bei der Verklebungsfestigkeit bei Temperaturen oberhalb von 50 °C. Durch ein Erweichen der vornehmlich aus Polystyrol bestehenden Hartphasen (Blockpolystyroldomänen) kommt es insbesondere bei der Verklebung von mittelschweren Gegenständen zum kohäsiven Versagen der Haftklebestreifen.

Ein Versagen der Verklebung tritt besonders bei einer Kippscherbelastung (bei der ein Drehmoment wirksam ist, wie zum Beispiel bei der Verklebung eines Hakens) deutlich stärker auf als bei einer reinen Scherbelastung.

Vernetzbare stripfähige Klebmassen sind bekannt aus DE 198 33 174 A1 und DE 102 12 049 A1. Die Vernetzung in DE 102 12 049 A1 erfolgt strahlenchemisch, entweder durch UV- oder Elektronenstrahlung. Eine Vernetzung durch chemische Reaktion zweier Komponenten ist nicht genannt. Obwohl die Wärmestabilität der Klebmassen deutlich gegenüber den nicht vernetzten Systemen erhöht ist, ist die erreichbare Klebleistung nicht so hoch wie in erfindungsgemäßen Klebebändern. DE 198 33 174 A1 beschreibt eine chemische Vernetzung, allerdings werden nur Harze vernetzt, eine Vernetzung der Elastomere findet nicht statt.

Klebmassen auf Basis von säureanhydridmodifizierten Blockcopolymeren und Epoxidharzen sind bekannt aus US 5,369,167. Beschrieben wird eine Herstellungsmethode dieser Compounds. Es werden zudem Härter eingesetzt für die Vernetzung des Epoxidharzes. Ein Klebeband wird nicht erwähnt.

Ähnliche Klebmassen sind auch in JP 57/149369 A beschrieben. Wieder wird ein Härter für das Epoxidharz benötigt. Ein Klebeband ist nicht näher beschrieben.

Aufgabe der Erfindung ist es daher, eine verbesserte Klebmasse auf der Basis von Vinylaromatenblockcopolymeren für Klebfolienstreifen zu schaffen, die sich durch dehnende Verstreckungen in Richtung der Verklebungsebene rückstands- und zerstörungsfrei wieder ablösen lassen, die bei erhöhter Temperatur eine gute Verklebungsfestigkeit aufweisen und die auch für die Befestigung schwerer Gegenstände geeignet sind.

Die Aufgabe wird mit einer gattungsgemäßen Klebmasse erfindungsgemäß gelöst, wie sie im Hauptanspruch niedergelegt ist. Gegenstand der Unteransprüche sind dabei vorteilhafte Weiterbildungen der Klebmasse sowie die Verwendung in einem Klebestreifen.

Demgemäß betrifft die Erfindung eine Klebemasse für einen Klebfolienstreifen enthaltend ein Gemisch aus
- einem säure- oder säureanhydridmodifizierten Vinylaromatenblockcopolymer sowie
- einer epoxidgruppenhaltigen Verbindung mit mindestens zwei Epoxidgruppen die bei Temperaturen von mindestens 120 °C, insbesondere mindestens 150 °C vernetzt wird, wobei sich der Klebfolienstreifen durch dehnendes Verstrecken in Richtung der Klebfuge lösen lässt.

Die Vernetzung der Vinylaromatenblockcopolymere erfolgt durch die Reaktion der gebundenen Säure- beziehungsweise Säureanhydridgruppen mit den Epoxidgruppen.
Dabei kann die Vernetzung wenigsten teilweise schon während des Herstellprozesses des Klebebandes, wenn die Klebmasse aus der Schmelze gewonnen wird, durchgeführt werden. Die endgültige Vernetzung findet dann bei der Anwendung statt, bei der das Klebeband während des Verklebens erhitzt werden muss auf mindestens 120 °C, insbesondere mindestens 150 °C, besser 180 °C. Dieses Erhitzen kann durch eine Heizpresse oder durch einfaches Aufbügeln mit einem Bügeleisen geschehen. Auch ein Erhitzen mit Hilfe eines Föns ist möglich, wobei das Klebeband nur erst auf einen der Verklebungspartner geklebt wird, dann mit heißer Luft erwärmt wird und anschließend unter Druck die Verklebung mit dem zweiten Fügepartner vorgenommen wird, wobei günstigstenfalls der zweite Fügepartner vorgeheizt wird.

Das Klebeband kann zum einen so eingestellt werden, dass es bei Raumtemperatur haftklebrig ist, zum anderen auch so, dass es bei Raumtemperatur nicht klebrig ist, so dass für die Verklebung ein Erwärmen notwendig ist.

Durch die Vernetzung werden die kohäsiven Eigenschaften deutlich verbessert, besonders bei erhöhten Temperaturen. Überraschenderweise hat sich gezeigt, dass durch diese chemische Vernetzung die Stripfähigkeit beibehalten wird. Trotz der hohen Verklebungsleistung ist es möglich, die Klebebänder durch Ziehen in Richtung der Verklebungsebene wieder aus der Klebfuge zu lösen.

Damit stripfähige Klebebänder leicht und rückstandsfrei wieder abgelöst werden können, müssen sie bestimmte mechanische Eigenschaften besitzen. Das Verhältnis der Reißkraft und der Stripkraft muss größer als zwei, bevorzugt größer als drei sein. Dabei ist die Stripkraft diejenige Kraft, die aufgewendet werden muss, um einen Klebestreifen aus einer Klebfuge durch paralleles Ziehen in Richtung der Verklebungsebene wieder zu lösen. Das Verhältnis von Stripkraft und Reißkraft wird stark durch die Dicke der Klebestreifen beeinflusst, da die zum Ablösen benötigte Abzugskraft sich aus der Kraft zusammensetzt, welche für das Ablösen des Klebebandes von den Verklebungsuntergründen nötig ist, und der Kraft, welche zur Verformung des Klebebandes aufgewendet werden muss. Die zur Verformung des Klebebandes erforderliche Kraft ist annähernd der Dicke des Klebebandes proportional. Die zum Ablösen benötigte Abzugskraft kann im betrachteten Dickenbereich vereinfacht als konstant angenommen werden. Die Reißfestigkeit steigt hingegen proportional zur Dicke der Klebestreifen an. Hieraus folgt, dass für Klebebänder mit einem Einschichtaufbau, wie in der DE 33 31 016 C2 offenbart, die Reißfestigkeit unterhalb einer bestimmten Dicke kleiner als die Abzugskraft wird. Oberhalb einer bestimmten Dicke wird das Verhältnis von Abzugskraft zur Stripkraft hingegen größer als zwei. Wenn die Reißkraft der eingesetzten Polymere aber sehr niedrig ist, folgt daraus, dass die Dicke sehr groß werden muss, wodurch auch die Stripkräfte ansteigen. Um zu vermeiden, dass die zum Strippen benötigte Kraft zu groß wird, sollte die Stripkraft pro Klebestreifen jedoch nicht größer als 30 N sein.
Da durch die hohe Kohäsionssteigerung während der Vernetzung natürlich die Reißfestigkeit erhöht wird, können auch Klebestreifen mit deutlich geringerer Dicke hergestellt werden, als dies bei nicht vernetzten Systemen der Fall ist. Dadurch lässt sich auch ein Anstieg in der Stripkraft, der durch die Vernetzung hervorgerufen wird, leicht kompensieren.

Anstatt in einem Einschichtaufbau, bei dem der gesamte Klebestreifen aus Klebmasse besteht, lassen sich erfindungsgemäße Klebmassen auch in Mehrschichtaufbauten mit einem Zwischenträger einsetzen. Dabei sind sowohl überwiegend elastische Träger, wie sie zum Beispiel in US 4,024,312 A oder DE 197 08 366 A1 beschrieben sind, als auch überwiegend plastische Träger, wie in WO 92/11333 A1 oder zum Beispiel DE 196 49 727 A1 beschrieben, möglich. Wichtig ist nur, dass die kohäsiven Eigenschaften des Trägers bei hohen Temperaturen nicht schlechter sind als die der Klebmasse, wobei dieses auch durch eine Vernetzung geschehen kann, und dass der Träger während des heißen Verklebens keinen Schaden nimmt.
Auch einseitig klebrige Klebebänder, die nur auf einer Seite eines Trägers eine Klebmasseschicht besitzen sind möglich. Auch Klebebänder, die zwar doppelseitig mit Klebmasse ausgerüstet sind, aber auf beiden Seiten des Trägers eine unterschiedliche Klebmasse tragen, sind denkbar. Diese Klebebänder können besonders gut für die Verklebung zweier sehr unterschiedlicher Materialien eingesetzt werden, wobei die beiden Klebmassen dann genau auf den jeweiligen Untergrund abgestimmt sein können.

Als Klebmassen finden bevorzugt solche auf Basis von Blockcopolymeren enthaltend Polymerblöcke überwiegend gebildet von Vinylaromaten (A-Blöcke), bevorzugt Styrol, und solchen überwiegend gebildet durch Polymerisation von 1,3-Dienen (B-Blöcke), bevorzugt Butadien und Isopren Anwendung. Sowohl Homo- als auch Copolymerblöcke sind erfindungsgemäß nutzbar. Resultierende Blockcopolymere können gleiche oder unterschiedliche B-Blöcke enthalten, die teilweise oder selektiv hydriert sein können. Blockcopolymere können eine lineare A-B-A-Struktur aufweisen. Einsetzbar sind ebenfalls Blockcopolymere von radialer Gestalt sowie sternförmige und lineare Multiblockcopolymere. Als weitere Komponenten können A-B-Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.
Zumindest ein Teil der eingesetzten Blockcopolymere muss dabei säure- oder säureanhydridmodifiziert sein, wobei die Modifizierung hauptsächlich durch radikalische Pfropfcopolymerisation von ungesättigten Mono- und Polycarbonsäuren oder
-säureanhydriden wie zum Beispiel Fumarsäure, Itaconsäure, Citraconsäure, Acrylsäure, Maleinsäureanhydrid, Itaconsäureanhydrid oder Citraconsäureanhydrid, bevorzugt Maleinsäureanhydrid erfolgt. Bevorzugt liegt der Anteil an Säure beziehungsweise Säureanhydrid zwischen 0,5 und 4 Gewichtsprozenten bezogen auf das gesamte Blockcopolymer.

Kommerziell sind solche Blockcopolymere z.B. unter dem Namen Kraton™ FG 1901 und Kraton™ FG 1924 der Firma Shell, bzw. Tuftec™ M 1913 und Tuftec™ M 1943 der Fa. Asahi erhältlich.

Die Klebmasse hat vorzugsweise einen Anteil von 20 bis 80 Gew.-% von säureanhydridfunktionalisiertem Vinylaromatenblockcopolymer, vorzugsweise 30 bis 70 Gew.-%, und besonders bevorzugt 40 bis 60 Gew.-%.

Als Epoxidharze werden üblicherweise sowohl monomere als auch oligomere Verbindungen mit mehr als einer Epoxidgruppe pro Molekül verstanden. Dieses können Reaktionsprodukte von Glycidestern oder Epichlorhydrin mit Bisphenol A oder Bisphenol F oder Mischungen aus diesen beiden sein. Einsetzbar sind ebenfalls Epoxidnovolakharze gewonnen durch Reaktion von Epichlorhydrin mit dem Reaktionsprodukt aus Phenolen und Formaldehyd. Auch monomere Verbindungen mit mehreren Epoxidendgruppen, die als Verdünner für Epoxidharze eingesetzt werden, sind verwendbar. Ebenfalls sind elastisch modifizierte Epoxidharze einsetzbar oder epoxidmodifizierte Elastomere wie zum Beispiel epoxidierte Styrolblockcopolymere, zum Beispiel Epofriend™ der Firma Daicel.

Beispiele von Epoxidharzen sind Araldite™ 6010, CY-281™, ECN™ 1273, EC 1280, MY 720, RD-2 von Ciba Geigy, DE 331, 732, 736, DE 432 von Dow Chemicals, Epon™ 812, 825, 826, 828, 830 etc. von Shell Chemicals, HPT™ 1071, 1079 ebenfalls von Shell Chemicals, Bakelite™ EPR 161, 166, 172, 191, 194 etc. der Bakelite AG.

Kommerzielle aliphatische Epoxidharze sind zum Beispiel Vinylcyclohexandioxide wie ERL-4206, 4221, 4201, 4289 oder 0400 von Union Carbide Corp.

Elastifizierte Elastomere sind erhältlich von der Firma Noveon unter dem Namen Hycar.

Epoxidverdünner, monomere Verbindungen mit mehreren Epoxidgruppen sind zum Beispiel Bakelite™ EPD KR, EPD Z8, EPD HD, EPD WF, etc. der Bakelite AG oder Polypox™ R 9, R12, R 15, R 19, R 20 etc. der Firma UCCP.

Obwohl wie oben beschrieben die Zugabe von Vernetzern nicht nötig ist, können trotzdem weitere Härter zugesetzt werden. Als Härter sollten hier nur Stoffe mit Säure- oder Säureanhydridgruppen eingesetzt werden, da die hauptsächlich für Epoxidvernetzung eingesetzten Amine und Guanidine mit dem Säureanhydrid reagieren und damit die Anzahl der reaktiven Gruppen herabsetzen.

Neben den schon genannten säure- oder säureanhydridmodifizierten Vinylaromatenblockcopolymeren können auch noch weitere Säuren oder Säureanhydride zugesetzt werden, um einen höheren Vernetzungsgrad und damit eine noch weiter verbesserte Kohäsion zu erreichen. Dabei sind sowohl monomere Säureanhydride und Säuren wie in US 3,970,608 A beschrieben als auch säure- oder säureanhydridmodifizierte Polymere als auch säureanhydridenthaltende Copolymere wie Polyvinylmethylether-maleinsäureanhydrid-Copolymere, zum Beispiel zu beziehen unter dem Namen Gantrez™, vertrieben von der Firma ISP, einsetzbar.

Als Klebrigmacher nutzen erfindungsgemäße Klebmassen als Hauptkomponente insbesondere Klebharze, die mit dem Elastomerblock der Vinylaromatenblockcopolymere verträglich sind.
Bevorzugt geeignet sind unter anderem nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen, Polyterpenharze auf Basis von α-Pinen und/oder β-Pinen und/oder δ-Limonen, hydrierte Polymerisate von bevorzugt reinen C₈- und C₉-Aromaten. Vorgenannte Klebharze können sowohl allein als auch im Gemisch eingesetzt werden.

Als weitere Additive können typischerweise genutzt werden:
- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Endblockverstärkerharze
- Füllstoffe, wie zum Beispiel Siliziumdioxid, Glas (gemahlen oder in Form von Kugeln), Aluminiumoxide, Zinkoxide, Calciumcarbonate, Titandioxide, Ruße, etc. ebenso wie Farbpigmente und Farbstoffe sowie optische Aufheller
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien, chemisch im wesentlichen gesättigte Elastomere, wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine, um nur einige wenige zu nennen.

Plastifizierungsmittel, wie zum Beispiel Flüssigharze, Weichmacheröle oder niedermolekulare flüssige Polymere, wie zum Beispiel niedermolekulare Polybutene mit Molmassen < 1500 g/mol (Zahlenmittel), werden zumeist in sehr geringen Mengen von ≤ 10 Gew.-% eingesetzt, bevorzugt wird auf ihre Verwendung vollständig verzichtet.

Durch die Zugabe von so genannten Beschleunigern kann die Reaktionsgeschwindigkeit erhöht werden.
Beschleuniger können zum Beispiel sein:
- tertiäre Amine, wie Benzyldimethylamin, Dimethylaminomethylphenol, Tris(dimethylaminomethyl)phenol
- Bortrihalogenid-Amin-Komplexe
- substituierte Imidazole
- Triphenylphosphin
wie in WO 97/30101 A1 näher beschrieben.

Idealerweise werden die säure- beziehungsweise säureanhydridmodifizierten Elastomere und Epoxidharze in einem Mengenverhältnis eingesetzt, dass der molare Anteil an Epoxidgruppen und Anhydridgruppen gerade äquivalent ist. Bei der Verwendung von nur gering modifizierten Elastomeren und dem Einsatz niedermolekularer Epoxidharze mit einem niedrigen Epoxidäquivalent ergeben sich dabei nur sehr geringe Mengen - von unter 10 Gew.-% bezogen auf das modifizierte Vinylaromatenblockcopolymer - an Epoxidharz, die eingesetzt werden.
Das Verhältnis zwischen Anhydridgruppen und Epoxidgruppen kann aber in weiten Bereichen variiert werden, dabei sollte für eine ausreichende Vernetzung keine der beiden Gruppen in mehr als einem zehnfachen molaren Überschuss vorliegen.

Erstaunlicherweise bleiben die besonderen Eigenschaften der Klebmassen, die gerade für den Strippprozess erforderlich sind, wie eine hohe Dehnbarkeit und weitest gehender Verlust der Klebrigkeit im gedehnten Zustand, erhalten, so dass die vernetzten Klebmassen in stripfähigen Klebebändern verwendet werden können.

Durch eine chemische Vernetzung wie oben beschrieben werden die Reißkräfte und Stripkräfte zum Lösen der Klebeverbindung merklich erhöht. Da die Reißkräfte aber häufig proportional stärker wachsen, als die Stripkräfte, wird das Verhältnis von Reißkraft zu Stripkraft durch eine Vernetzung günstiger, die Reißerneigung nimmt dadurch ab.

Die Herstellung und Verarbeitung der Klebmassen kann sowohl aus der Lösung, als auch aus der Schmelze erfolgen. Besonders bevorzugt ist jedoch die Fertigung der Klebmassen aus der Schmelze, wobei insbesondere Batchverfahren als auch kontinuierliche Verfahren eingesetzt werden können. Besonders vorteilhaft ist die kontinuierliche Fertigung der Klebmassen mit Hilfe eines Extruders. Der Härter wird dabei bevorzugt am Ende des Prozesses zugegeben, um eine zu starke Vernetzung des Systems schon während der Fertigung zu vermeiden.
Nach der Compoundierung der Klebmassen werden sie beschichtet.

Erfindungsgemäße Klebmassen können sowohl für einseitig als auch für beidseitig klebrige durch dehnendes Verstrecken rückstandsfrei und zerstörungsfrei wiederablösbare Klebebänder genutzt werden. Einseitige Klebebänder können hierbei zum Beispiel durch einseitige Inertisierung zuvor genannter beidseitig klebriger Klebebänder erhalten werden beziehungsweise durch einseitige Beschichtung eines hoch dehnbaren Trägers.

Die entstandenen Klebfolien können als Klebebandrollen, Klebestreifen oder Stanzlinge konfektioniert werden. Optional kann ein nicht klebriger Anfasserbereich vorgesehen sein, von welchem aus der Ablöseprozess ausgeführt werden kann.

Nachfolgend werden einige Beispiele für vernetzte stripfähige Klebmassen aufgeführt.

Die Klebmassen wurden hierbei in einem heizbaren Kneter mit Sigma-Schaufel (Werner und Pfleiderer LUK 1,0 K3 ausgerüstet mit einem Thermostaten LTH 303 der Firma mgw LAUDA) bei einer Temperatur von ca. +160 bis +180 °C und unter Inertisierung mit CO₂ als Schutzgas zu einer homogenen Mischung verarbeitet, wobei vor der Zugabe der Härterkomponente auf 140 °C abgekühlt wurde. Nach dem Erkalten wurden durch ca. 10-minütiges Verpressen der Klebmasse bei +120 °C bis +140 °C in einer temperierbaren Presse (Typ KHL 50 der Firma Bucher-Guyer) einschichtige Klebstofffolienstücke unterschiedlicher Dicke hergestellt.

Durch Ausstanzen werden einschichtige Klebestreifen der gewünschten Abmessungen erhalten. Zur Herstellung mehrschichtiger Klebestreifen können die entsprechenden Schichten zuvor durch Kaschierung (gegebenenfalls durch Heißkaschierung) verbunden und danach die Klebestreifen durch Ausstanzen vereinzelt werden.

Im Folgenden wird die Erfindung anhand von Beispielen näher erklärt, ohne damit die Erfindung in irgendeiner Form beschränken zu wollen.

### Beispiel 1

| | | |
|---|---|---|
| 50 Teile | Kraton™ FG 1901 | Maleinsäureanhydridmodifiziertes SEBS der Firma Kraton |
| 50 Teile | Kraton™ FG 1924X | Maleinsäureanhydridmodifiziertes SEBS der Firma Kraton |
| 100 Teile | Regalite™ R 100 | hydriertes Kohlenwasserstoffharz der Firma Eastman |
| 3 Teile | Bakelite™ EPR 172 | Epoxidharz der Firma Bakelite |
| Dicke der Klebmasse 650 µm. | | |

### Beispiel 2

| | | |
|---|---|---|
| 50 Teile | Kraton™ FG 1901 | Maleinsäureanhydridmodifiziertes SEBS der Firma Kraton |
| 50 Teile | Kraton™ FG 1924X | Maleinsäureanhydridmodifiziertes SEBS der Firma Kraton |
| 20 Teile | Regalite™ R 100 | hydriertes Kohlenwasserstoffharz der Firma Eastman |
| 3 Teile | Bakelite™ EPR 172 | Epoxidharz der Firma Bakelite |
| Dicke der Klebmasse 200 µm. | | |

### Vergleichsbeispiel 3

| | | |
|---|---|---|
| 50 Teile | Kraton™ G 1650 | SEBS der Firma Kraton |
| 50 Teile | Kraton™ G 1657 | SEBS der Firma Kraton |
| 100 Teile | Regalite™ R 1100 | hydriertes Kohlenwasserstoffharz der Firma Eastman |
| Dicke der Klebmasse 650 µm. | | |

Bei den Klebestreifen mit den beispielhaften Klebgemischen wurden die folgenden mechanischen und klebtechnischen Daten ermittelt:

| Klebmasse Beispiel Nr. | Zugfestigkeit in MPa | Strip-Spannung in MPa | Kippscherstandzeit in Tagen |
|---|---|---|---|
| 1, unvernetzt | 6,3 | 0,8 | |
| 1, vernetzt | 8,1 | 1,0 | >100 Tage bei 2 kg 90 mm Hebel |
| 2, unvernetzt | 12,3 | 3,2 | |
| 2, vernetzt | 15,4 | 3,7 | >100 Tage bei 4 kg 90 mm Hebel |
| 3, unvernetzt | 5,8 | 0,8 | 12 Tage bei 1 kg 50 mm Hebel |

Während das Beispiel 1 eine haftklebrige Klebmasse ist, die in ihrer Zusammensetzung der Klebmasse 3 entspricht, die nur die nichtmodifzierten analogen Elastomere der Klebmasse 1 verwendet, ist die Klebmasse 2 nicht haftklebrig, die Klebrigkeit muss erst durch Wärme aktiviert werden.

Wie aus den Messergebnissen erkennbar ist, lassen sich die Klebestreifen der Beispiele 1 und 2 gut vernetzen. Die Stripkräfte steigen merklich an, besonders bei Beispiel 2, weshalb hier eine geringere Dicke gewählt wurde, um ein Abstrippen mit angemessener Kraft zu ermöglichen.

Durch die Vernetzung steigt die Halteleistung sehr stark an, so dass auch Verklebungen im konstruktiven Bereich möglich sind.

Gewichte von 1 kg werden bei einem Hebel von 30 mm bei Temperaturen von 100 °C noch über 100 Tage gehalten, unvernetzte Klebmassen versagen hier schon bei Temperaturen über 50 °C.

Die mechanischen und klebtechnischen Daten wurden wie folgt ermittelt:

Die Zugfestigkeit beziehungsweise maximale Dehnung wurde in Anlehnung an DIN 53504 unter Verwendung von Schulterstäben der Größe S3 bei einer Separationsgeschwindigkeit von 300 mm pro Minute gemessen.

Die Ablösekraft (Stripkraft beziehungsweise Stripspannung) wurde mit Hilfe einer Klebstofffolie mit den Abmessungen 50 mm Länge x 20 mm Breite mit einem am oberen Ende nicht klebrigen Anfasserbereich ermittelt. Die Klebstoff-Folie wurde zwischen zwei deckungsgleich zueinander angeordneten Stahlplatten mit einer Abmessung von 50 mm x 30 mm mit einem Anpressdruck von jeweils 50 Newton verklebt. Zur Vernetzung wurden die Stahlplatten bei 200 °C für 5min gepresst. Die Stahlplatten haben an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden für eine Dauer von 24 Stunden bei +40 °C gelagert. Nach der Rekonditionierung auf Raumtemperatur wird der Klebfolienstreifen mit einer Zuggeschwindigkeit von 1000 mm pro Minute parallel zur Verklebungsebene und kontaktfrei zu den Kantenbereichen der beiden Stahlplatten herausgelöst. Dabei wird die erforderliche Ablösekraft in Newton (N) gemessen. Angegeben wird der Mittelwert der Stripspannungswerte (in N pro mm²), gemessen in dem Bereich, in welchem der Klebestreifen auf einer Verklebungslänge zwischen 10 mm und 40 mm von den Stahluntergründen abgelöst ist.

Zur Bestimmung der Kippscherfestigkeit wird die zu prüfende Klebstofffolie der Abmessung 20 mm x 50 mm, die an einem Ende beidseitig mit einem nicht klebrigen Anfasserbereich versehen ist (erhalten durch Aufkaschieren von 25 µm starker biaxial verstreckter Polyesterfolie der Abmessungen 20 mm x 13 mm (Hostaphan RN 25)) mittig auf eine hochglanzpolierte quadratische Stahlplatte der Abmessung 40 mm Länge x 40 mm Breite x 3 mm Dicke verklebt. Die Stahlplatte ist rückseitig mittig mit einem 10 cm langen Stahlstift versehen, welcher vertikal auf der Plattenfläche sitzt. Die erhaltenen Probekörper werden mit einer Kraft von 100 N auf den zu prüfenden Haftgrund (Stahl) mit einer Andruckzeit von 5 Sekunden verklebt und 5 Minuten im unbelasteten Zustand belassen. Zur eventuellen Vernetzung wird 5 min bei 200 °C gepresst. Nach Beaufschlagung der gewählten Kippscherbelastung durch Anhängen eines Gewichtes (zum Beispiel 20 N bei 90 mm Hebelarm) wird die Zeit bis zum Versagen der Verklebung (Kippscherstandzeit) ermittelt. Das Testklima ist dabei 23 °C bei einer relativen Luftfeuchtigkeit von 50 %.

## Patentansprüche

1. Klebemasse für einen Klebfolienstreifen enthaltend ein Gemisch aus einem säure- oder säureanhydridmodifizierten Vinylaromatenblockcopolymer sowie einer epoxidgruppenhaltigen Verbindung mit mindestens zwei Epoxidgruppen die bei Temperaturen von mindestens 120 °C, insbesondere mindestens 150 °C vernetzt wird, wobei sich der Klebfolienstreifen durch dehnendes Verstrecken in Richtung der Klebfuge lösen lässt.

2. Klebemasse nach Anspruch 1, **dadurch gekennzeichnet, dass** die Vinylaromtenblockcopolymere Polystyrolendblöcke besitzen.

3. Klebemasse nach Anspruch 1 oder 2, **dadurch gekennzeichnet, dass** die Klebmasse Klebharze enthält.

4. Klebemasse nach zumindest einem der Ansprüche 1 bis 3, **dadurch gekennzeichnet, dass** die Klebmasse bei Raumtemperatur haftklebrig ist.

5. Klebemasse nach zumindest einem der vorhergehenden Ansprüche, **dadurch gekennzeichnet, dass** die Klebmasse weitere Elastomere enthält.

6. Klebemasse nach zumindest einem der vorhergehenden Ansprüche, **dadurch gekennzeichnet, dass** die Klebmasse weitere Säuren oder Säureanhydride enthält.

7. Klebemasse nach zumindest einem der vorhergehenden Ansprüche, **gekennzeichnet durch** einen Anteil von 20 bis 80 Gew.-%, bevorzugt von 30 bis 70 Gew.-%, ganz besonders bevorzugt von 40 bis 60 Gew.-% von Styrolblockcopolymer bezogen auf die gesamte Klebmasse.

8. Klebemasse nach zumindest einem der vorhergehenden Ansprüche, **dadurch gekennzeichnet, dass** die Klebmasse weitere Abmischkomponenten enthält, insbesondere Weichmacher, Alterungsschutzmittel, Verarbeitungshilfsmittel, Füllstoffe, Farbstoffe, optische Aufheller, Stabilisatoren.

9. Klebemasse nach zumindest einem der vorhergehenden Ansprüche, **dadurch gekennzeichnet, dass** die Klebmasse Vernetzungsbeschleuniger enthält.

10. Verwendung einer Klebemasse nach zumindest einem der vorhergehenden Ansprüche in einem ein- oder beidseitigen Klebfolienstreifen.

11. Verwendung nach Anspruch 10, **dadurch gekennzeichnet, dass** der Klebfolienstreifen einen dehnbaren Zwischenträger besitzt.
